# DEMANDE DE BREVET EUROPEEN

(11) **EP 3 115 881 A1**
(43) Date de publication de la demande: **11.01.2017**
(21) Numéro de dépôt: 16178108.3
(22) Date de dépôt: 06.07.2016
(51) Int. Cl.: G06F 3/06

(54) **PROCEDE DE SYNCHRONISATION AUTOMATIQUE DE DONNEES DEPUIS UN APPAREIL NUMERIQUE VERS UN ESPACE DE STOCKAGE DE DONNEES DISTANT VIA UN RESEAU DE TELECOMMUNICATION MOBILE**

(30) Priorité: 09.07.2015 FR 1556514
(71) Demandeur: BULL SAS, 78340 Les Clayes sous Bois (FR)
(72) Inventeur: AIELLO, Damien, 38500 La Buisse (FR); DIALLO, Youssouph, 38610 Gières (FR); RADANLIEV, Martin, 38000 Grenoble (FR)
(74) Mandataire: Cabinet Camus Lebkiri

(57) **Abrégé**

La présente invention se rapporte essentiellement à un procédé de synchronisation automatique de données depuis un appareil numérique (110) vers un espace de stockage de données distant (140) via un réseau de télécommunication mobile (130), l'appareil numérique (110) étant équipé d'une carte mémoire (120) comportant une zone de stockage de données (122), le procédé étant caractérisé en ce qu'il comporte les étapes suivantes :
- configurer (210) la carte mémoire (120) sur une machine informatique ;
- connecter (220) la carte mémoire (120) à l'appareil numérique (110) ;
- acquérir (230) des données au moyen de l'appareil numérique (110) ;
- mémoriser (240) dans la zone de stockage (122) de la carte mémoire (120) les données acquises par l'appareil numérique (110) ;
- transmettre (250) automatiquement depuis la carte mémoire vers l'espace de stockage distant (140), via le réseau de télécommunication mobile (130), les données mémorisées dans la zone de stockage (122), la carte mémoire (120) comportant des moyens de transmission de données via le réseau de télécommunication mobile (130).

## Description

### DOMAINE TECHNIQUE DE L'INVENTION

La présente invention se rapporte aux domaines techniques des télécommunications et de la sauvegarde de données numériques.

La présente invention concerne ainsi un procédé de synchronisation automatique de données depuis un appareil numérique vers un espace de stockage de données distant via un réseau de télécommunication mobile.

### ARRIERE-PLAN TECHNOLOGIQUE DE L'INVENTION

Actuellement, la sauvegarde de données d'un appareil numérique, tel qu'un appareil photo ou un caméscope, est réalisée sur un support de stockage amovible de type carte mémoire. Il existe différents types de cartes mémoire, par exemple les cartes SD, xD et CompactFlash, le format SD étant le plus répandu.

Une caractéristique de la carte mémoire est sa capacité de stockage des données, celle-ci étant bien évidemment limitée. De ce fait, lorsque la carte mémoire est pleine, l'appareil numérique ne peut plus acquérir de données. Si l'utilisateur de l'appareil numérique se trouve dans l'impossibilité de transférer les données contenues sur la carte mémoire vers un autre support de stockage, comme un ordinateur, il doit alors prévoir d'emmener un nombre suffisant de cartes mémoire.

Par ailleurs, les données ne sont mémorisées qu'à un seul endroit, la carte mémoire. Dans l'éventualité où celle-ci est endommagée ou perdue, les données sont alors irrémédiablement perdues. L'utilisation d'une carte mémoire implique donc un faible niveau de protection contre la perte de données.

Pour tenter de résoudre ces problèmes, certains appareils numériques parmi les plus récents sont équipés de technologies de communication sans fil, comme le Wifi ou le Bluetooth. Les données stockées sur la carte mémoire peuvent ainsi être transférées vers un autre moyen de stockage.

Cependant, il est nécessaire que ces appareils restent à proximités d'un dispositif de communication sans fil, comme une borne Wifi ou un ordinateur, ce qui est en contradiction avec une utilisation nomade pour laquelle les appareils numériques sont prévus. De plus, les problèmes restent entiers pour les appareils numériques plus anciens dépourvus de technologies de communication sans fil.

Une autre solution consiste à intégrer les technologies de communication sans fil directement à la carte mémoire. Ce faisant, n'importe quel appareil numérique équipé d'une telle carte mémoire peut transférer des données. Toutefois, cette solution nécessite toujours de rester à proximité d'un dispositif de communication sans fil.

### RESUME DE L'INVENTION

La présente invention vise à résoudre les problèmes qui viennent d'être exposés en proposant un procédé de sauvegarde de données provenant d'une carte mémoire équipant un appareil numérique. Les données sont copiées sur un serveur distant. Par conséquent, les données sont mémorisées sur deux dispositifs de stockage différents, la carte mémoire et le serveur distant, améliorant ainsi le niveau de protection contre la perte de données. Les données sont de plus immédiatement accessibles depuis n'importe quel endroit où il est possible de se connecter au serveur.

Pour être copiées sur le serveur distant, les données sont transmises par l'intermédiaire d'un réseau de télécommunication mobile. Il n'est alors plus nécessaire de se trouver à proximité d'un dispositif de communication sans fil, mais dans un lieu se trouvant dans la zone de couverture du réseau de télécommunication mobile.

Par ailleurs, lorsque la carte mémoire est pleine, il est possible de libérer de la place en supprimant des données préalablement transmises. En contrepartie d'un retour à un niveau classique de protection contre la perte de données, l'utilisation de l'appareil numérique est ainsi prolongée. Le confort d'utilisation est alors amélioré en évitant notamment de devoir transporter une multitude de cartes mémoire.

La présente invention concerne donc essentiellement un procédé de synchronisation automatique de données depuis un appareil numérique vers un espace de stockage de données distant via un réseau de télécommunication mobile, l'appareil numérique étant équipé d'une carte mémoire comportant une zone de stockage de données, le procédé étant caractérisé en ce qu'il comporte les étapes suivantes :
- configurer la carte mémoire sur une machine informatique ;
- connecter la carte mémoire à l'appareil numérique ;
- acquérir des données au moyen de l'appareil numérique ;
- mémoriser dans la zone de stockage de la carte mémoire les données acquises par l'appareil numérique ;
- transmettre automatiquement à l'espace de stockage distant, via le réseau de télécommunication mobile, les données mémorisées dans la zone de stockage de la carte mémoire.

Le procédé selon l'invention peut également comporter une ou plusieurs caractéristiques parmi les suivantes, considérées individuellement ou selon les combinaisons techniquement possibles :
- le procédé comporte une étape d'envoi depuis l'espace de stockage distant vers la carte mémoire d'un accusé de réception des données transmises ;
- la carte mémoire comporte un fichier de journalisation référençant les données mémorisées à transmettre, le procédé comportant une étape de mise à jour du fichier de journalisation lorsque les données mémorisées sont transmises ;
- le procédé comporte une étape d'effacement automatique, sur la zone de stockage de la carte mémoire, des données transmises à l'espace de stockage distant ;
- l'étape de configuration de la carte mémoire comporte une opération d'activation de l'étape d'effacement automatique des données mémorisées sur la zone de stockage transmises à l'espace de stockage distant ;
- l'étape de configuration de la carte mémoire comporte une opération initiale d'authentification ;
- l'étape de transmission automatique des données est suspendue lorsque le réseau de télécommunication mobile est inaccessible, la transmission automatique des données reprenant lorsque le réseau de télécommunication mobile est de nouveau accessible ;
- l'étape de configuration comporte une opération de paramétrage d'un mode de déclenchement de la transmission automatique des données mémorisées ;
- le mode de déclenchement est paramétré de sorte que la transmission automatique des données mémorisées est effectuée au fur et à mesure de la mémorisation des données dans la zone de stockage de la carte mémoire ;
- le mode de déclenchement est paramétré de sorte que la transmission automatique des données mémorisées est effectuée lorsque la zone de stockage de la carte mémoire présente un taux de remplissage ayant atteint un seuil prédéterminé.

### BREVE DESCRIPTION DES FIGURES

L'invention et ses différentes applications seront mieux comprises à la lecture de la description qui suit et à l'examen des figures qui l'accompagnent, parmi lesquelles :
- la figure 1 représente schématiquement un exemple de contexte de mise en oeuvre du procédé selon l'invention ;
- la figure 2 représente un diagramme fonctionnel d'un mode de mise en oeuvre du procédé selon l'invention ;

Les figures ne sont présentées qu'à titre indicatif et nullement limitatif de l'invention.

Pour plus de clarté, les éléments identiques ou similaires sont repérés par des signes de référence identiques sur toutes les figures.

### DESCRIPTION DETAILLEE D'UN MODE DE REALISATION DE L'INVENTION

L'invention a notamment pour objet de proposer un procédé destiné à synchroniser automatiquement des données depuis un appareil numérique vers un espace de stockage de données distant. Lorsque l'appareil numérique est en fonctionnement, la synchronisation des données est effectuée de manière complétement transparente pour un utilisateur de l'appareil numérique.

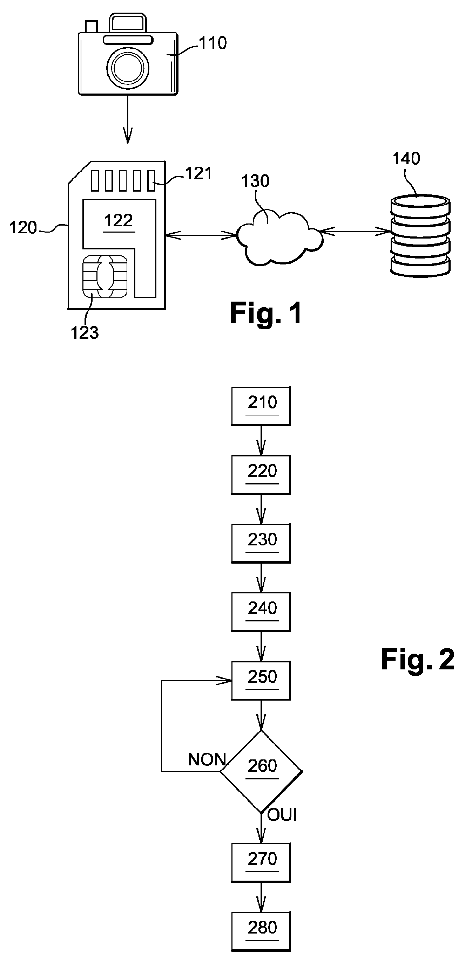

Les figures 1 et 2 sont décrites conjointement.

La figure 1 représente schématiquement un exemple de contexte de mise en oeuvre du procédé selon l'invention. La figure 1 montre un appareil numérique 110, tel qu'un appareil photo, un caméscope, un baladeur mp3, ou un assistant numérique personnel communément appelé PDA pour « Personal Digital Assistant » en anglais.

L'appareil numérique 110 est équipé d'une carte mémoire amovible 120. La carte mémoire 120 comporte des connecteurs 121 destinés à entrer en contact avec des connecteurs correspondant disposés dans l'appareil numérique 110.

Dans cet exemple de contexte de mise en oeuvre du procédé selon l'invention, la carte mémoire 120 est une carte SD. Ce format est actuellement le plus répandu. Le procédé selon l'invention peut également être mis en oeuvre avec des cartes CompactFlash, xD ou tout autre type de carte mémoire amovible.

La carte mémoire 120 comporte une zone de stockage de données 122 permettant notamment de mémoriser des données acquises par l'appareil numérique 110. La carte mémoire 120 comporte des moyens de transmission, par l'intermédiaire d'un réseau de télécommunication mobile 130 possédant une zone de couverture, des données contenues dans la zone de stockage 122 vers un espace de stockage distant 140. La carte mémoire 120 est par exemple équipée d'une puce 3G ou d'une puce 4G.

Pour accéder au réseau de télécommunication mobile 130, la carte mémoire 120 comporte un module d'identité d'abonné 123, couramment appelé carte SIM 123 pour « Subscriber Identity Module » en anglais. La carte SIM 123 s'insère dans la carte mémoire 120, cette dernière assurant la gestion de la carte SIM 123 de manière totalement transparente pour l'appareil numérique 110, et donc pour l'utilisateur. La carte SIM 123 provient par exemple du téléphone portable de l'utilisateur.

Les différentes étapes relatives à un mode de mise en oeuvre du procédé de synchronisation de données selon l'invention sont par exemple les suivantes, illustrées sur le diagramme fonctionnel de la figure 2.

Au cours d'une étape 210, la carte mémoire 120 est configurée sur une machine informatique. La carte mémoire 120 est par exemple insérée dans un emplacement dédié de la machine informatique ou dans un dispositif adaptateur lui-même connecté à la machine informatique. La machine informatique est par exemple un ordinateur sur lequel est installé un logiciel dédié à la configuration de la carte mémoire 120.

Au cours de cette étape de configuration 210, l'espace de stockage distant 140 est désignée comme destination des données à transmettre. Par exemple, une adresse de destination associée à l'espace de stockage distant 140 est enregistrée sur la carte mémoire 120. Lorsqu'il le souhaite, l'utilisateur de l'appareil numérique 110 peut ainsi facilement changer d'emplacement pour sauvegarder les données de la carte mémoire 120.

Afin d'empêcher une tierce personne d'utiliser la carte mémoire 120, l'étape de configuration 210 comporte avantageusement une opération initiale d'authentification.

L'authentification est par exemple réalisée au moyen de la carte SIM 123 insérée dans la carte mémoire 120. En effet, la carte SIM 123 possède une fonction de sécurisation se présentant sous la forme d'un numéro d'identification personnel, communément appelé code PIN pour « Personal Identification Number » en anglais. L'authentification peut également être réalisée au moyen d'un identifiant associé à un mot de passe qu'il faut saisir dans le logiciel installé sur la machine informatique.

Après avoir été configurée, la carte mémoire 120 est connectée à l'appareil numérique 110 au cours d'une étape 220. L'appareil numérique 110 procède ensuite à une étape d'acquisition 230 de données. On entend par « acquisition de données » toute création ou modification d'un fichier sur l'appareil numérique 110. Il s'agit par exemple de prendre une photo, de filmer une scène, ou d'éditer un fichier texte.

Les données acquises par l'appareil numérique 110 sont ensuite mémorisées, au cours d'une étape 240, dans la zone de stockage 122 de la carte mémoire 120. Cette étape de mémorisation 240 permet ainsi à la carte mémoire 120 de remplir sa fonction classique de sauvegarde de données.

Au cours d'une étape 250, les données mémorisées dans la zone de stockage 122 de la carte mémoire 120 sont transmises automatiquement à l'espace de stockage 140. La transmission des données est qualifiée d'automatique car elle s'effectue sans intervention de l'utilisateur. Elle est de plus transparente pour ce dernier.

L'étape de transmission 250 consiste à copier les données de la carte mémoire 120 sur l'espace de stockage 140. Les données transmises sont donc toujours présentes sur la carte mémoire 120. Ainsi, les données sont enregistrées sur deux supports de stockage de données, ce qui diminue le risque de perdre des données, par exemple en cas de défaillance de l'un des supports de stockage. De plus, les données sont rendues immédiatement accessibles depuis tout endroit où l'on peut accéder à l'espace de stockage 140.

La transmission des données est réalisée via le réseau de télécommunication mobile 130. L'appareil numérique 110 n'est donc pas obligé de se trouver à proximité d'un dispositif de communication sans fil. Le champ d'action du procédé de synchronisation selon l'invention, équivalent à la zone de couverture du réseau de télécommunication mobile 130, est ainsi fortement augmenté par rapport à l'art antérieur.

Le réseau de télécommunication mobile 130 peut parfois être inaccessible, par exemple lorsque l'appareil numérique 110 est hors tension ou lorsqu'il se trouve en dehors de la zone de couverture du réseau de télécommunication mobile 130. Dans ce cas, la transmission des données est avantageusement suspendue puis reprise lorsque le réseau de télécommunication mobile 130 est de nouveau accessible.

De préférence, l'étape de configuration 210 de la carte mémoire comporte une opération de paramétrage d'un mode de déclenchement de l'étape de transmission 250 des données. En effet, il est par exemple possible de choisir d'effectuer la transmission des données à chaque fois que des données sont mémorisées sur la carte mémoire 120. Une autre possibilité consiste à transmettre les données lorsque la zone de stockage 122 de la carte mémoire 120 présente un taux de remplissage ayant atteint un seuil prédéterminé. Ce seuil peut également être paramétrable pendant l'étape de configuration 210.

Avantageusement, l'espace de stockage distant 140 envoie à la carte mémoire 130, au cours d'une étape 260, un accusé de réception des données transmises. L'espace de stockage distant 140 a bien reçu les données et la carte mémoire 120 considère ainsi que la transmission des données a réussie.

Avantageusement, après l'étape de transmission 250 des données, la carte mémoire 120 procède à une étape de mise à jour 270 d'un fichier de journalisation dans lequel sont listées les données mémorisées dans la zone de stockage 122 de la carte mémoire 120. Cette étape consiste à notifier dans le fichier de journalisation les données transmises à l'espace de stockage 140. Ainsi, la carte mémoire 120 sait à tout moment quelles données sont encore à transmettre.

L'étape de mise à jour 270 du fichier de journalisation est de préférence réalisée lorsque la carte mémoire 120 a reçu l'accusé de réception envoyé par l'espace de stockage 140. En effet, si la carte mémoire 120 ne reçoit pas d'accuser de réception, cela signifie que la transmission des données a échouée. Il est alors possible de renouveler l'étape de transmission 250 des données.

Dans le mode de mise en oeuvre de la figure 2, le procédé de synchronisation comporte une étape d'effacement automatique 280 de la zone de stockage 122 transmises à l'espace de stockage distant 140. Ainsi, de l'espace est libéré dans la zone de stockage 122 de la carte mémoire 120, ce qui permet de prolonger son utilisation.

De même que la transmission des données, l'effacement des données sur la carte mémoire 120 est qualifié d'automatique car il s'effectue sans action de l'utilisateur.

De préférence, l'étape de configuration 210 de la carte mémoire 120 comporte une opération d'activation de l'étape d'effacement 280 des données. Le choix est laissé libre à l'utilisateur de l'appareil numérique 110 d'activer ou de désactiver l'effacement des données. Cela revient à choisir respectivement entre une plus grande capacité mémoire ou un meilleur niveau de protection contre la perte de données.

Ainsi, grâce au procédé selon l'invention, les données mémorisées dans la zone de stockage 122 de la carte mémoire 120 équipant l'appareil numérique 110 sont synchronisées sur un espace de stockage distant 140, et ce quel que soit l'endroit où se trouve l'appareil numérique 110 dans la zone de couverture du réseau télécommunication mobile 130.

De plus, les différentes options de configuration disponibles procurent une grande souplesse d'utilisation. Le procédé s'adapte pour répondre aux besoins de l'utilisateur et une fois la configuration de la carte mémoire 120 effectuée, le procédé selon l'invention est totalement transparent pour l'utilisateur.

Naturellement l'invention n'est pas limitée au mode de mise en oeuvre décrit en référence aux figures et des variantes pourraient être envisagées sans sortir du cadre de l'invention.

## Revendications

1. Procédé de synchronisation automatique de données depuis un appareil numérique (110) vers un espace de stockage de données distant (140) via un réseau de télécommunication mobile (130), l'appareil numérique (110) étant équipé d'une carte mémoire (120) comportant une zone de stockage de données (122), le procédé étant **caractérisé en ce qu'**il comporte les étapes suivantes :
- configurer (210) la carte mémoire (120) sur une machine informatique ;
- connecter (220) la carte mémoire (120) à l'appareil numérique (110) ;
- acquérir (230) des données au moyen de l'appareil numérique (110) ;
- mémoriser (240) dans la zone de stockage (122) de la carte mémoire (120) les données acquises par l'appareil numérique (110) ;
- transmettre (250) automatiquement depuis la carte mémoire vers l'espace de stockage distant (140), via le réseau de télécommunication mobile (130), les données mémorisées dans la zone de stockage (122), la carte mémoire (120) comportant des moyens de transmission de données via le réseau de télécommunication mobile (130).

2. Procédé selon la revendication précédente comportant une étape d'envoi (260) depuis l'espace de stockage distant (140) vers la carte mémoire (120) d'un accusé de réception des données transmises.

3. Procédé selon l'une quelconque des revendications précédentes dans lequel la carte mémoire (120) comporte un fichier de journalisation référençant les données mémorisées à transmettre, le procédé comportant une étape de mise à jour (270) du fichier de journalisation lorsque les données mémorisées sont transmises.

4. Procédé selon l'une quelconque des revendications précédentes comportant une étape d'effacement (280) automatique, sur la zone de stockage (122) de la carte mémoire (120), des données transmises à l'espace de stockage distant (140).

5. Procédé selon l'une quelconque des revendications précédentes dans lequel l'étape de configuration (210) de la carte mémoire (120) comporte une opération d'activation de l'étape d'effacement (280) automatique des données transmises à l'espace de stockage distant (140).

6. Procédé selon l'une quelconque des revendications précédentes dans lequel l'étape de configuration (210) de la carte mémoire (120) comporte une opération initiale d'authentification.

7. Procédé selon l'une quelconque des revendications précédentes dans lequel l'étape de transmission (250) automatique des données est suspendue lorsque le réseau de télécommunication mobile (130) est inaccessible, la transmission automatique des données reprenant lorsque le réseau de télécommunication mobile (130) est de nouveau accessible.

8. Procédé selon l'une quelconque des revendications précédentes dans lequel l'étape de configuration (210) de la carte mémoire (120) comporte une opération de paramétrage d'un mode de déclenchement de la transmission automatique des données mémorisées.

9. Procédé selon l'une quelconque des revendications 1 à 8 dans lequel le mode de déclenchement est paramétré de sorte que la transmission automatique des données mémorisées est effectuée au fur et à mesure de la mémorisation des données dans la zone de stockage (122) de la carte mémoire (120).

10. Procédé selon l'une quelconque des revendications 1 à 8 dans lequel le mode de déclenchement est paramétré de sorte que la transmission automatique des données mémorisées est effectuée lorsque la zone de stockage (122) de la carte mémoire (120) présente un taux de remplissage ayant atteint un seuil prédéterminé.
